(19)

Europäisches
Patentamt
European
Patent Office
Office européen
des brevets

(11) **EP 2 813 549 A1**

(12) **EUROPEAN PATENT APPLICATION**
published in accordance with Art. 153(4) EPC

(43) Date of publication:
**17.12.2014 Bulletin 2014/51**

(21) Application number: **12865375.5**

(22) Date of filing: **09.01.2012**

(51) Int Cl.:
*C08L 77/06* (2006.01)   *C08K 5/5313* (2006.01)
*C08K 3/00* (2006.01)

(86) International application number:
**PCT/CN2012/070128**

(87) International publication number:
**WO 2013/104098 (18.07.2013 Gazette 2013/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **Kingfa Sci Tech. Co., Ltd.
Guangzhou, Guangdong 510663 (CN)**
• **Shanghai Kingfa Sci & Tech Co. Ltd.
Shanghai 201714 (CN)**

(72) Inventors:
• **LONG, Jieming
Guangzhou
Guangdong 510663 (CN)**
• **JIANG, Sujun
Guangzhou
Guangdong 510663 (CN)**
• **YI, Qingfeng
Guangzhou
Guangdong 510663 (CN)**

• **YAN, Xia
Guangzhou
Guangdong 510663 (CN)**
• **MAI, Jiehong
Guangzhou
Guangdong 510663 (CN)**
• **CHEN, Jian
Guangzhou
Guangdong 510663 (CN)**
• **NING, Kaijun
Guangzhou
Guangdong 510663 (CN)**
• **CAI, Tongmin
Guangzhou
Guangdong 510663 (CN)**

(74) Representative: **Ström & Gulliksson AB
Studentgatan 1
P.O. Box 4188
203 13 Malmö (SE)**

(54) **HALOGEN-FREE FIRE-RETARDANT POLYAMIDE COMPOSITION, AND PREPARATION METHOD AND APPLICATION THEREOF**

(57)   Disclosed are a halogen-free fire-retardant polyamide composition, and a preparation method and application thereof. The halogen-free fire-retardant polyamide composition is prepared from 35 to 71.5% of a semi-aromatic polyamide, 10 to 35% of a fire retardant and 0 to 50% of an inorganic reinforcing filler, the terminal amino group content of the semi-aromatic polyamide being 80 to 150 mol/t. The halogen-free fire-retardant polyamide composition of the present invention has good heat stability and releases only a small amount of gas in production; mold dirt is not easily formed, and the halogen-free fire-retardant polyamide composition can be produced continuously.

Fig. 1

EP 2 813 549 A1

## Description

### Field of the Invention

The invention belongs to the field of modified plastics, and specifically relates to a halogen-free Fire-retardant polyamide composition and a preparation method and an application thereof.

### Background of the Invention

Polyamide resin has excellent mechanical strength, heat resistance, chemical resistance, wear resistance and self-lubricating property, is widely applied in electronic and electrical appliances, automobiles, furniture, building materials and fibers and has become one of the most important engineering plastics. Materials used as automobile parts and elements of the electronic and electrical appliances need to have excellent heat resistance, moldability and low water absorption, so that various semi-aromatic polyamides with relatively high heat resistance and low water absorption rate need to be adopted.

In recent years, from the viewpoint of environmental protection, surface mounting lead-free solder is developed as a high-density mounting method. The reflux temperature of the lead-free solder is often higher than the temperature of lead and tin eutectic solder which is currently widely used. When the surface mounting technology (SMT) is adopted, the elements for surface mounting must be exposed at high temperature of 250-260°C. Therefore, when the lead-free solder is used for welding printed circuit boards and electronic and electrical elements, the resin used for forming the electronic and electrical elements must have higher heat resistance. In addition, halogen Fire-retardant materials which have always been used have great environmental harm, so that environment-friendly halogen-free Fire-retardant materials must be developed.

Patent WO 9609344 discloses use of fire retardants of mixtures of phosphonates or hypophosphite and triazine derivatives; patent US 6255371 discloses a polymer composition containing polyamide or polyester, wherein the polymer composition contains a hypophosphite or diphosphinate and a fire retardant of melamine derivatives; but the fire retardants of the triazine derivatives or the melamine derivatives are unstable at high temperature, and can be precipitated to the material surface under high-temperature and high-humidity conditions particularly. Patent US 5773556 discloses a composition containing a polyamide and a hypophosphite or diphosphinate.

The above halogen-free fire retardants have good heat resistance, are stable in the processing process of high temperature-resistant polyamide, but cause a very obvious problem, namely a problem of very obvious mold dirt in the processing process. Generally, a mold needs to be cleaned when continuous injection molding has been performed for several hours, so the continuity of production is affected, and the phenomenon urgently needs to be solved.

Generally, mold dirt is caused by the fire retardants of the hypophosphite. Due to the presence of the fire retardants, the heat stability of the polyamide compositions is reduced, thereby producing a series of problems, such as more out-gassing, serious mold dirt, serious corrosion of processing equipment and the like. Therefore, many documents and reports have focused on the improvement of the heat stability of the polyamide compositions through a method of adding a heat stabilizer.

Patent EP1950238 discloses a fire-retardant semi-aromatic polyamide composition capable of improving color stability, mainly comprising: 1) at least one semi-aromatic polyamide resin (P); 2) at least one fire retardant (FR) comprising a hypophosphite or diphosphinate; 3) at least one hindered phenolic stabilizer (HPS); and 4) at least one phosphite stabilizer (PS); but the fire-retardant semi-aromatic polyamide composition does not contain a hindered amine stabilizer (ASHS) or the content of the stabilizer in all the stabilizers is not higher than 15% of (HPS)+(PS)+(ASHS). In the embodiment of the patent, FR is Exolit® OP1230, and HPS is Irganox®1010; and PS uses Ultranox®626 and ASHS uses Nylostab® S-EED. Actually, the method has a certain effect on the color stability of the composition, but the problems caused by volatile substances in the processing process can not be fundamentally solved.

Patent US2008068973 discloses a halogen-free fire-retardant polyamide composition, and the composition contains a certain amount of zinc stannate and can reduce the corrosion of equipment in the processing process. Patent US200900301241 discloses a halogen-free fire-retardant polyamide composition, and the composition contains a certain amount of zinc borate and can reduce the corrosion of equipment in the processing process. The essences of the two patents are basically consistent. Acidic substances produced in the processing process of the halogen-free fire-retardant polyamide composition are absorbed through the added compound, so that the corrosive effect of a halogen-free fire-retardant material in the processing process can be reduced to a certain extent.

Chinese patent 0212683.3 discloses a composition containing a semi-aromatic polyamide with not more than $15\mu eq/g$ of terminal amino groups and a copper compound, and the composition has excellent heat aging performance. The copper compound is CuCl/KI. The examples in embodiments refer to polyamide resin or glass fiber reinforced compositions containing some copper compounds, but there are no fire-retardant examples. The situation that the copper compounds can protect amide groups from being oxidized has been widely studied and maturely applied. The copper compounds actually have obvious effects in some non-fire retardant systems, but do not have significant effects in halogen-free fire-retardant systems. Furthermore, the copper compounds contain halogen compounds and are not suitable for halogen-free systems.

Many reports believe that, the lower the content of the terminal amino groups in the polyamide resin is, the better the heat stability of the polyamide will be. So that the content of the terminal amino groups is controlled to be less than 50mol/t in most of the polyamide resin, and preferably, monocarboxylic acid is used as a terminating agent. Although a specific action mechanism is not clear, in actual applications, it is found that acidic products are easily produced by the halogen-free fire-retardant polyamide composition at high temperature. Particularly, as for the monocarboxylic acid-terminated polyamide, the substances can accelerate the decomposition of the polyamide, so that volatile substances are increased in the processing process, and the problems of mold dirt and corrosion are further caused. The phenomena can be alleviated to a certain extent by improving the heat stability of the halogen-free fire-retardant polyamide composition through the addition of a heat stabilizer or an acid absorption agent.

## Summary of the Invention

In order to overcome the defects in the prior art, the invention firstly aims at providing a halogen-free fire-retardant semi-aromatic polyamide composition. The composition has the advantages of good fire retardance, excellent heat stability, little produced volatile gas in a processing process and difficulty in formation of mold dirt.

Another purpose of the invention is to provide a preparation method of the halogen-free fire-retardant polyamide composition.

Further purpose of the invention is to provide a use of the halogen-free fire-retardant polyamide composition.

The purposes of the invention are implemented through the following technical solution.

A halogen-free fire-retardant polyamide composition is prepared from the following components in percentage by mass:

> 35-71.5% of semi-aromatic polyamide;
> 10-35% of fire retardant; and
> 0-50% of inorganic reinforcing filler.

Preferably, a halogen-free fire-retardant polyamide composition is prepared from the following components in percentage by mass:

> 39.5-71.5% of semi-aromatic polyamide;
> 10-28% of fire retardant; and
> 0-50% of inorganic reinforcing filler.

The halogen-free fire-retardant polyamide composition can further contain an antioxidant, a synergist, a heat stabilizer, a lubricant, a plasticizer, a nucleating agent, an anti-dripping agent or a pigment.

The semi-aromatic polyamide is monoamine-terminated, and the content of terminal amino groups is 80-150mol/t; and the semi-aromatic polyamide with the content of the terminal amino groups within this range can inhibit acidic substances generated in the processing process of the halogen-free fire-retardant polyamide composition and further effectively reduce the gas volatilization amount and the corrosion in the processing process of the halogen-free fire-retardant polyamide composition.

The content of the terminal amino groups in the semi-aromatic polyamide is preferably 80-120 mol/t, particularly preferably 80-100 mol/t. When the content of the terminal amino groups is more than 150 mol/t, the heat stability of the composition becomes poor due to the oxidation of the composition; and when the concentration of the terminal amino groups is too low, the volatile gas of the composition at high temperature is increased.

The intrinsic viscosity of the semi-aromatic polyamide is more than 1.00 dl/g, and the appropriately high intrinsic viscosity can meet the mechanical properties required in actual use; and the melting point of the semi-aromatic polyamide is 280-320°C, the melting point is higher than 280°C so as to meet the temperature-resistant requirements in a lead-free welding surface mounting technology (SMT) and the melting point is not higher than 320°C so as to ensure that the processing temperature in the application process can not be too high to cause the decomposition of the polyamide.

The semi-aromatic polyamide is prepared by the following method:

> (1) enabling dicarboxylic acid and diamine to react to obtain a semi-aromatic polyamide salt;
> (2) performing pre-polymerization on the semi-aromatic polyamide salt taken as a raw material to obtain a pre-polymer of the polyamide, wherein a terminating agent and a catalyst need to be added in the pre-polymerization; and
> (3) performing solid-phase tackifying reaction or melting tackifying reaction on the pre-polymer to obtain the semi-aromatic polyamide,

wherein the dicarboxylic acid comprises 45-100% of aromatic dicarboxylic acid and 0-55% of aliphatic dicarboxylic acid, wherein the percentage is molar percentage; the aromatic dicarboxylic acid is more than one of terephthalic acid, isophthalic acid, 2-methyl terephthalic acid, 2,5-dichloro-terephthalic acid, 2,6-naphthalenedicarboxylic acid, 1,4-naphthalenedicarboxylic acid, 4,4'-biphenyldicarboxylic acid or 2,2'-biphenyldicarboxylic acid, preferably more than one of terephthalic acid, isophthalic acid or 4,4'-biphenyldicarboxylic acid and particularly preferably terephthalic acid and isophthalic acid; the number of carbon atoms of the aliphatic dicarboxylic acid unit is 4-12; the aliphatic dicarboxylic acid is more than one of 1,4-succinic acid, 1,6-adipic acid, 1,8-suberic acid, 1,9-azelaic acid, 1,10-sebacic acid, 1,11-undecanoic acid or 1,12-dodecanedioic acid, preferably 1,4-succinic acid and/or 1,6-adipic acid; the diamine is aliphatic diamine or alicyclic diamine; the number of carbon atoms of the aliphatic diamine is 4-12; the aliphatic diamine is one of 1,4-butanediamine, 1,6-hexanediamine, 1,8-octanediamine, 1,9-nonanediamine, 1,10-decanediamine, 1,11-undec-diamine, 1,12-dodecamethylenediamine, 2-methyl-1,5-pentanediamine, 3-methyl-1,5-pentanediamine, 2,4-dimethyl-1,6-hexanediamine, 2,2,4-trimethyl-1,6-hexanediamine, 2,4,4-trimethyl-1,6-hexanediamine, 2-methyl-1,8-octanediamine or 5-methyl-1,9-nonanediamine, and preferably one of 1,4-butanediamine, 1,6-hexanediamine, 1,9-nonanediamine or 1,10-decanediamine; and the alicyclic diamine is more than one of cyclohexanediamine, methyl cyclohexanediamine or 4,4'-diamino-dicyclohexyl methane.

With respect to the pre-polymerization in step (2), reactants firstly interact for 1h at 220°C, and then the reaction is performed at 230 °C and 2Mpa for 2h.

The catalyst is one of phosphoric acid, phosphorous acid, hypophosphorus acid or salts or esters thereof, preferably one of sodium phosphate, sodium phosphite, sodium hypophosphite or potassium phosphite; and the using amount of the catalyst is 0.01-2% of the mass of the semi-aromatic polyamide salt in step (2), preferably 0.05-1%.

The terminating agent is preferably monoamines, including aliphatic monoamines, alicyclic monoamines and aromatic monoamines; the aliphatic monoamines are preferably ethylamine, n-propylamine, isopropylamine, n-butylamine, sec-butylamine, isobutylamine, n-pentylamine, n-hexylamine, n-decylamine, n-dodecylamine and stearylamine; the alicyclic monoamines are preferably cyclohexylamine; and the aromatic monoamines are preferably aniline, p-toluidine, o-toluidine, 2,6-dimethylaniline, 3,4-dimethylaniline and o-ethylaniline. The terminating agent is more than one of the above monoamines, most preferably one of butylamine, n-hexylamine, n-decylamine, n-dodecylamine, aniline or cyclohexylamine.

The using amount of the terminal agent is 0.2-10% of the mass of the semi-aromatic polyamide salt in step (2), preferably 0.5-5%. When the amount of the terminating agent is too high, the molecular weight of a polymer is slightly small; and when the amount of the terminating agent is too low, the molecular weight of the polymer is slightly large or the content of active terminal groups of the polymer is slightly large. For the solid-phase tackifying reaction in step (3), the reactants react under a nitrogen atmosphere at 260°C for 12h.

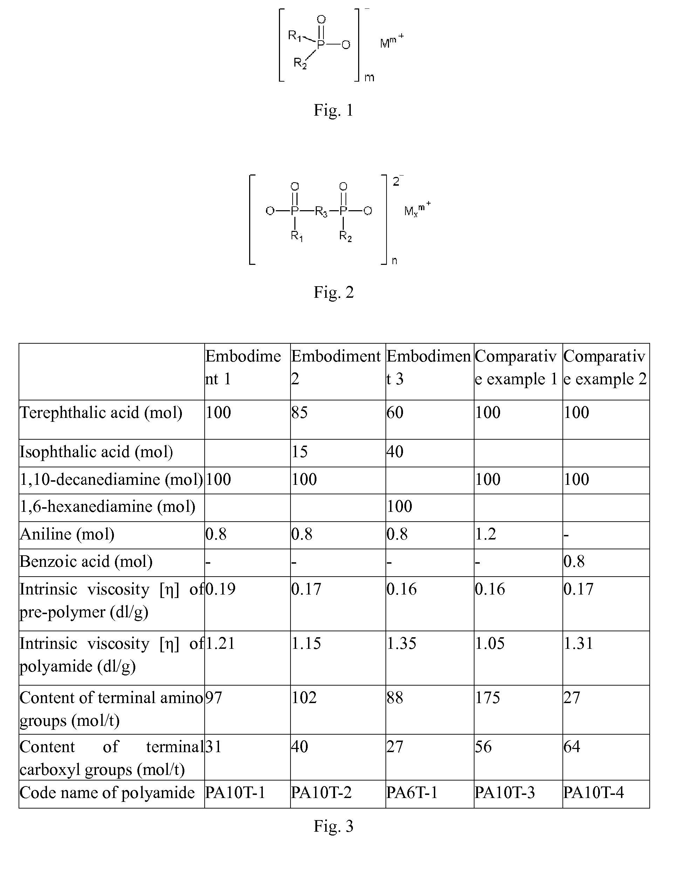

The fire retardant is a phosphinate with a structure as shown in Fig. 1 or a diphosphinate with a structure as shown in Fig. 2.

In Fig. 1 and Fig. 2, $R_1$ and $R_2$ are alkyl or aryl with 1-6 carbon atoms; $R_3$ is alkylene with 1-10 carbon atoms, or arylene, alkylarylene or arylalkylene with 6-10 carbon atoms; M is calcium, magnesium, aluminum or zinc ion; m is 2 or 3; n is 1 or 3; x is 1 or 2.

In Fig. 1 and Fig. 2, $R_1$ and $R_2$ are preferably methyl, ethyl, n-propyl, isopropyl, n-butyl, tert-butyl, n-pentyl or phenyl; $R_3$ is preferably methylene, ethylidene, n-propylidene, isopropylidene, n-butylidene, tert-butylidene, n-pentylidene, n-octylidene, n-undecylidene or phenylene or naphthylene, methylphenylene, ethylphenylene, tert-butyl phenylene, methyl naphthylene, ethyl naphthylene, tert-butyl naphthylene or phenylmethylene, phenylethylene, phenylpropylene or phenylbutylene; and m is preferably aluminum ion or zinc ion;

The fire retardant is preferably diethyl aluminum hypophosphite and/or methyl ethyl aluminum hypophosphite.

The inorganic reinforcing filler is more than one of carbon fiber, glass fiber, potassium titanate fiber, glass microbeads, glass flakes, talcum powder, mica, clay, kaolin, silica, silica dust, diatomite or calcium carbonate, preferably more than one of carbon fiber, glass fiber or potassium titanate fiber, particularly preferably glass fiber. By using the glass fiber, the moldability of the composition is improved, the tensile strength, the flexural strength, the bending modulus and other mechanical properties, as well as heat deformation temperature and other heat-resistant properties of a molded body formed by a resin composition are simultaneously improved.

The halogen-free fire-retardant polyamide composition is obtained by melt-mixing of the semi-aromatic polyamide, the fire retardant and the inorganic reinforcing filler, and the melt-mixing can use a single-screw or twin-screw extruder, a blender, an internal mixer, an open mill and other melt mixers.

The halogen-free fire-retardant polyamide composition can be used for manufacturing electronic components, such as connectors and the like.

The halogen-free Fire-retardant polyamide composition can be manufactured into a molded product by injection molding, blow molding, extrusion or thermoforming. Compared with the prior art, the invention has the following advantages and effects. The halogen-free Fire-retardant polyamide composition of the invention has good heat stability, releases a small amount of gas in a production process, is less prone to forming mold dirt and can realize continuous production.

**Brief Description of the Drawings**

Fig. 1 is a schematic diagram of a structure of fire retardant hypophosphite.
Fig. 2 is a schematic diagram of a structure of fire retardant diphosphinate.
Fig. 3 shows performance parameters of semi-aromatic polyamide prepared by embodiments and comparative examples.
Fig. 4 is performance parameters of a polyamide composition prepared by embodiments and comparative examples.

**Detailed Description of the Embodiments**

The invention is further described in detail in combination with the following embodiments and accompanying drawings, but the implementation ways of the invention is not limited thereto.

A determination method of relevant performance parameters, which is used by the embodiments of the invention is as follows:

1. Intrinsic viscosity [η]

The inherent viscosities $\eta_{inh}$ of polyamide at the concentrations of 0.05, 0.1, 0.3 and 1g/dl are respectively measured in concentrated sulfuric acid at 25°C.

$$\eta_{inh} = [\ln(t_1/t_0)]/C$$

wherein $\eta_{inh}$ represents inherentviscosity (dl/g), $t_0$ represents the flowing-through time of solvent (sec), $t_1$ represents the flowing-through time of sample solution (sec) and C represents the concentration of the sample solution (g/dl).

The data of $\eta_{inh}$ is extrapolated to the concentration of 0 to obtain the intrinsic viscosity [η] of a sample.

2. Content of terminal amino groups

The content of terminal amino groups of the sample is titrated by using a full-automatic potentiometric titrator. 0.5g of polymer is taken, 45ml of phenol and 3ml of anhydrous methanol are added, heating reflux is performed, after complete dissolution of a test sample is observed, the test sample is cooled to room temperature, and the content of the terminal amino groups is titrated by using a calibrated hydrochloric acid standard solution.

3. Content of terminal carboxyl groups

The content of terminal carboxyl groups of the sample is titrated by using the full-automatic potentiometric titrator. 0.5g of polymer is taken, 50ml of o-cresol is added, reflux dissolution is performed, 400μL of formaldehyde solution is rapidly added after cooling, and then the content of the terminal carboxyl groups is titrated by using a calibrated KOH-ethanol solution.

4. Testing of fire retardance

Halogen-free fire-retardant polyamide is dried at 120°C for 4h and then injection-molded according to a standard for testing.

The testing of flame retardance of the test sample with the thickness of 0.8mm is performed according to the UL-94 standard.

5. Assessment of volatile gas of halogen-free Fire-retardant composition

(1) Observation of injection molding: a halogen-free Fire-retardant composition is injection-molded to a standard test square plate of 100mm*100mm*1mm on an injection molding machine. When in injection molding, the melting temperature is 320°C, the temperature of a mold is 30°C, injection molding parameters are adjusted to enable the mold to be half filled with the melt composition, the continuous molding is performed by the mold for 50 times, the surface of the mold at the part which is not fully filled with the melt is observed, if mold dirt is obtained on the surface of the mold, the mold dirt is indicated in Table 2, and the mold dirt is divided into four grades of not obvious, slight, obvious and serious according to the quantity of the mold dirt.

(2) A large volume headspace sampling gas chromatography-mass spectrometry method (DHS-GS-MS) is used for analysis: the polyamide composition is crushed and screened by 25-mesh and 50-mesh screens, and 1g of a material is taken and placed into a US CDS 8000 type large-volume dynamic headspace sampling concentrator (with an adsorption trap filled with a Tenax-GC organic adsorption filler) for adsorption and extraction of volatile substances. The condition for the dynamic headspace sampling concentrator is set to constant temperature of 310°C for 15min, and then the volatile substances adsorbed by argon are blown to a gas chromatography-mass spectrometry (GC-MS) device for separation analysis. A GC-MS total ion current chromatogram is processed, the sum of regional areas formed by various substance ion peaks and a baseline is used for representing the quantity of the volatile substances of the composition, and the quantity of the volatile substances in Embodiment 4 is set to be 100.

Embodiment 1

A preparation method of semi-aromatic polyamide comprises the following steps:

(1) uniformly mixing 16.61kg of terephthalic acid (100mol) and 40kg of dimethylformamide, and heating the mixture to 120°C while stirring to obtain solution A; further uniformly mixing 17.23kg of 1,10-decanediamine (100mol) and 20kg of dimethylformamide, and heating to 80°C while stirring to obtain a solution B; uniformly mixing the solution A and the solution B, heating the mixed solution to 120°C, simultaneously continuously stirring to realize full reaction; performing centrifugal separation on a mixed solution, washing an obtained precipitate with the dimethylformamide, and then washing with deionized water for several times to obtain 32.28kg of decanediamine terephthalate, wherein the yield is 95.4% and the melting point is 260°C.

(2) Adding 6769g (20mol) of decanediamine terephthalate, 76.4g (0.8mol) aniline, 6.77g (which is 0.1% by mass of semi-aromatic polyamide salt) of sodium hypophosphite and 2283g of deionized water into a 20L pressure kettle equipped with magnetic coupling stirrer, a condensing tube, a gas-phase port, a charging port and a pressure explosive-proof port, purging with nitrogen and then heating up; heating to 220°C while stirring within 2h, stirring a reaction mixture at 220°C for 1h and then increasing the temperature of reactants to 230°C while stirring; continuously reacting at constant temperature of 230°C and constant pressure of 2Mpa for 2h, keeping the pressure constant by removing formed water, and discharging after the completion of the reaction to obtain a pre-polymer with the intrinsic viscosity [$\eta$] of 0.19dl/g.

(3) Performing vacuum drying on the pre-polymer at 80°C for 24h, and then performing solid-phase tackifying at 260°C under a nitrogen atmosphere for 12h to obtain polydecane diamine terephthalamide (PA10T) resin, wherein the intrinsic viscosity [$\eta$] is 1.21dl/g, the content of terminal amino groups is 97mol/t, the content of terminal carboxyl groups is 41mol/t, and the code name of the obtained polyamide is "PA10T-1".

Embodiment 2

A preparation method of semi-aromatic polyamide comprises the following steps:

(1) Being the same as step (1) in Embodiment 1, wherein the differences lie in that, raw materials adopt terephthalic acid, isophthalic acid and 1,10-decanediamine, nylon salts of two carboxylic acids are prepared independently, the using amount of each raw material is as shown in Fig. 3, and the decanediamine terephthalate and decanediamine isophthalate are prepared.
Steps (2) and (3): being the same as steps (2) and (3) in Embodiment 1, performing pre-polymerization reaction and tackifying reaction on 5754g (17mol) of decanediamine terephthalate and 1015g (3mol) of decanediamine isophthalate, the code name of the obtained polyamide is "PA10T-2" and the performance parameters are as shown in Fig. 3.

Embodiment 3

A preparation method of semi-aromatic polyamide comprises the following steps:

(1) Being the same as step (1) in Embodiment 2, wherein the differences lie in that, raw materials adopt terephthalic acid, isophthalic acid and 1,6-hexanediamine, the using amount of each raw material is as shown in Fig. 3, and the hexanediamine terephthalate and hexanediamine isophthalate are prepared.
Steps (2) and (3): being the same as steps (2) and (3) in Embodiment 2, performing pre-polymerization reaction and tackifying reaction on 3388g (12mol) of hexanediamine terephthalate and 2259g (8mol) of hexanediamine isophthalate, wherein the code name of the obtained polyamide is "PA6T-1" and the performance parameters are as shown in Fig. 3.

Comparative example 1

A preparation method of semi-aromatic polyamide adopts the same raw materials, process steps and conditions as Embodiment 1, and the difference lies in that the using amount of a terminating agent aniline is 111.6g (1.2mol), wherein the code name of the obtained polyamide is "PA10T-3" and the performance parameters are as shown in Fig. 3.

Comparative example 2

A preparation method of semi-aromatic polyamide adopts the same raw materials, process steps and conditions as Embodiment 1, and the difference lies in that a terminating agent adopts benzoic acid (97.6g, 0.8mol), wherein the code name of the obtained polyamide is "PA10T-4" and the performance parameters are as shown in Fig. 3.

Embodiments 4-8 and comparative examples 3-4

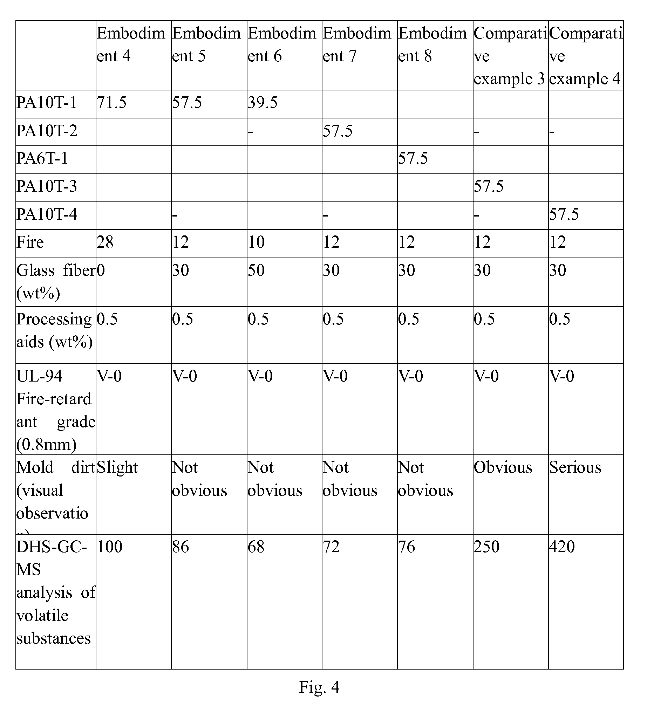

According to the mixture ratio of Fig. 4, a fire retardant, processing aids and semi-aromatic polyamide are uniformly mixed in advance, then a mixture and glass fiber are put into a twin-screw extruder for melt-mixing, and the glass fiber is fed from a side feeding port. The screw rotational speed of the twin-screw extruder is 300rpm and the temperature of a screw cylinder is 280-320°C. Molten and mixed materials are extruded from a mold port of the extruder, then quenched with water and granulated. The performance parameters of the obtained polyamide composition are as shown in Fig. 4.

The fire retardant in Fig. 4 is diethyl aluminum hypophosphite (OP1230, purchased from Clariant Company); the glass fiber is PREFORMAX 789 (purchased from Owens Corning Company); and the processing aids comprise an antioxidant and a lubricant, the antioxidant adopts 4,4'-bis ($\alpha,\alpha'$-dimethylbenzyl) diphenylamine (Naugard445, purchased from Chemtura Company) and the lubricant adopts Montan wax (licowaxOP, purchased from Clariant Company).

It can be seen from Fig. 4 that the heat stability of the halogen-free fire-retardant polyamide composition obtained by adopting the semi-aromatic polyamide at the specific concentration of the terminal amino groups is very good, very little gas is released in the production process of a molded product, mold dirt is not easy to form, and continuous production can be realized.

The above embodiments are preferred embodiments of the invention, but the invention is not limited thereto, and any other changes, modifications, substitutions, combinations and simplifications made to the invention without departing from the spirit essence and the principle of the invention should be considered as equivalent replacement ways and fall within the protection scope of the invention.

## Claims

1.   A halogen-free fire-retardant polyamide composition, **characterized in that** the halogen-free fire-retardant polyamide composition is prepared from the following components in percentage by mass:

> 35-71.5% of semi-aromatic polyamide;
> 10-35% of fire retardant; and
> 0-50% of inorganic reinforcing filler,
> wherein the content of terminal amino groups of the semi-aromatic polyamide is 80-150mol/t.

2.   The halogen-free fire-retardant polyamide composition according to claim 1,
**characterized in that**,
the halogen-free fire-retardant polyamide composition is prepared from the following components in percentage by mass:

> 39.5-71.5% of semi-aromatic polyamide;
> 10-28% of fire retardant; and
> 0-50% of inorganic reinforcing filler,

wherein the content of terminal amino groups of the semi-aromatic polyamide is 80-120mol/t, and the intrinsic viscosity is more than 1.00dl/g.

3.   The halogen-free fire-retardant polyamide composition according to claim 1, **characterized in that**, the semi-aromatic polyamide is prepared by the following method:

> (1) enabling dicarboxylic acid and diamine to react to obtain a semi-aromatic polyamide salt;
> (2) performing pre-polymerization on the semi-aromatic polyamide salt taken as a raw material to obtain a pre-polymer of the polyamide, wherein a terminating agent and a catalyst need to be added in pre-polymerization; and
> (3) performing solid-phase tackifying reaction or melting tackifying reaction on the pre-polymer to obtain the semi-aromatic polyamide,
wherein the dicarboxylic acid comprises 45-100% of aromatic dicarboxylic acid and 0-55% of aliphatic dicarboxylic acid, wherein the percentage is molar percentage; and the diamine is aliphatic diamine or alicyclic diamine.

4.   The halogen-free fire-retardant polyamide composition according to claim 3, **characterized in that**, the aromatic dicarboxylic acid is more than one of terephthalic acid, isophthalic acid, 2-methyl terephthalic acid, 2,5-dichloro-terephthalic acid, 2,6-naphthalenedicarboxylic acid, 1,4-naphthalenedicarboxylic acid, 4,4'-biphenyldicarboxylic acid or 2,2'-biphenyldicarboxylic acid;
the aliphatic dicarboxylic acid is more than one of 1,4-succinic acid, 1,6-adipic acid, 1,8-suberic acid, 1,9-azelaic acid, 1,10-sebacic acid, 1,11-undecanoic acid or 1,12-dodecanedioic acid;
the aliphatic diamine is one of 1,4-butanediamine, 1,6-hexanediamine, 1,8-octanediamine, 1,9-nonanediamine, 1,10-decanediamine, 1,11-undecdiamine, 1,12-dodecamethylenediamine, 2-methyl-1,5-pentanediamine, 3-methyl-1,5-pentanediamine, 2,4-dimethyl-1,6-hexanediamine, 2,2,4-trimethyl-1,6-hexanediamine, 2,4,4-dimethyl-1,6-hexanediamine, 2-methyl-1,8-octanediamine or 5-methyl-1,9-nonanediamine; and
the alicyclic diamine is more than one of cyclohexanediamine, methyl cyclohexanediamine or 4,4'-diamino-dicyclohexyl methane.

5.   The halogen-free fire-retardant polyamide composition according to claim 3, **characterized in that**, the aromatic dicarboxylic acid is terephthalic acid and/or isophthalic acid;
the aliphatic dicarboxylic acid is 1,4-succinic acid and/or 1,6-adipic acid; and
the aliphatic diamine is one of 1,4-butanediamine, 1,6-hexanediamine, 1,9-nonanediamine or 1,10-decanediamine.

6.   The halogen-free fire-retardant polyamide composition according to claim 3, **characterized in that**, the catalyst is one of sodium phosphate, sodium phosphite, sodium hypophosphite or potassium phosphite; and the using amount of the catalyst is 0.01-2% of the mass of the semi-aromatic polyamide salt in step (2); and
the terminating agent is one of butylamine, n-hexylamine, n-decylamine, n-dodecylamine, aniline or cyclohexylamine; and the using amount of the terminating agent is 0.2-10% of the mass of the semi-aromatic polyamide salt in step (2).

7.   The halogen-free fire-retardant polyamide composition according to claim 3, **characterized in that**,

with respect to the pre-polymerization in step (2), reactants firstly react for 1h at 220°C, and then the reaction is performed at 230°C and 2Mpa for 2h; and with respect to the solid-phase tackifying reaction in step (3), the reactants react under a nitrogen atmosphere at 260°C for 12h.

8. The halogen-free fire-retardant polyamide composition according to claim 1, **characterized in that** the fire retardant is diethyl aluminum hypophosphite and/or methyl ethyl aluminum hypophosphite; and the inorganic reinforcing filler is more than one of carbon fiber, glass fiber, potassium titanate fiber, glass microbeads, glass flakes, talcum powder, mica, clay, kaolin, silica, silica dust, diatomite or calcium carbonate.

9. An application of the halogen-free fire-retardant polyamide composition according to any of claims 1-8 in electronic components. 10. A molded product, **characterized in that** the molded product is prepared from the halogen-free Fire-retardant polyamide composition according to any of claims 1-8 through an injection molding, blow molding, extrusion or thermoforming method.

Fig. 1

Fig. 2

| | Embodiment 1 | Embodiment 2 | Embodiment 3 | Comparative example 1 | Comparative example 2 |
|---|---|---|---|---|---|
| Terephthalic acid (mol) | 100 | 85 | 60 | 100 | 100 |
| Isophthalic acid (mol) | | 15 | 40 | | |
| 1,10-decanediamine (mol) | 100 | 100 | | 100 | 100 |
| 1,6-hexanediamine (mol) | | | 100 | | |
| Aniline (mol) | 0.8 | 0.8 | 0.8 | 1.2 | - |
| Benzoic acid (mol) | - | - | - | - | 0.8 |
| Intrinsic viscosity [η] of pre-polymer (dl/g) | 0.19 | 0.17 | 0.16 | 0.16 | 0.17 |
| Intrinsic viscosity [η] of polyamide (dl/g) | 1.21 | 1.15 | 1.35 | 1.05 | 1.31 |
| Content of terminal amino groups (mol/t) | 97 | 102 | 88 | 175 | 27 |
| Content of terminal carboxyl groups (mol/t) | 31 | 40 | 27 | 56 | 64 |
| Code name of polyamide | PA10T-1 | PA10T-2 | PA6T-1 | PA10T-3 | PA10T-4 |

Fig. 3

| | Embodiment 4 | Embodiment 5 | Embodiment 6 | Embodiment 7 | Embodiment 8 | Comparative example 3 | Comparative example 4 |
|---|---|---|---|---|---|---|---|
| PA10T-1 | 71.5 | 57.5 | 39.5 | | | | |
| PA10T-2 | | | - | 57.5 | | - | - |
| PA6T-1 | | | | | 57.5 | | |
| PA10T-3 | | | | | | 57.5 | |
| PA10T-4 | | - | | - | | - | 57.5 |
| Fire | 28 | 12 | 10 | 12 | 12 | 12 | 12 |
| Glass fiber (wt%) | 0 | 30 | 50 | 30 | 30 | 30 | 30 |
| Processing aids (wt%) | 0.5 | 0.5 | 0.5 | 0.5 | 0.5 | 0.5 | 0.5 |
| UL-94 Fire-retardant grade (0.8mm) | V-0 | V-0 | V-0 | V-0 | V-0 | V-0 | V-0 |
| Mold dirt (visual observation) | Slight | Not obvious | Not obvious | Not obvious | Not obvious | Obvious | Serious |
| DHS-GC-MS analysis of volatile substances | 100 | 86 | 68 | 72 | 76 | 250 | 420 |

Fig. 4

## INTERNATIONAL SEARCH REPORT

| International application No. |
|---|
| PCT/CN2012/070128 |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

Documentation searched other than minimum documentation to the extent that such documents are included in the fields searched

IPC: C08L 77/-; C08K 5/-; C08K 3/-

Electronic data base consulted during the international search (name of data base and, where practicable, search terms used)

CNKI, CPRS, WPI, EPODOC, polyamide?, PA, +phosphate?, hypophosphite?, flame

### C. DOCUMENTS CONSIDERED TO BE RELEVANT

| Category* | Citation of document, with indication, where appropriate, of the relevant passages | Relevant to claim No. |
|---|---|---|
| X | CN 101735609 A (KINGFA SCI&TECH CO LTD) 16 June 2010 (16.06.2010) see description, page 4, paragraph [0036] and claims 1-10, | 1-2, 8-10 |
| Y | | 3-7 |
| Y | CN 101759851 A (KINGFA SCI&TECH CO LTD) 30 June 2010 (30.06.2010) claims 1-10 | 3-7 |
| X | WO 2010115961 A1 (SOLVAY ADVANCED POLYMER INC) 14 October 2010 (14.10.2010) claims 1-15 | 1-2, 8-10 |
| Y | | 3-7 |
| X | WO 2010139369 A1 (EMS-PATENT AG) 09 December 2010 (09.12.2010) claims | 1-2, 8-10 |
| Y | | 3-7 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 08 October 2012 (08.10.2012) | 25 October 2012 (25.10.2012) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Li<br><br>Telephone No. (86-10) **62084418** |
|---|---|

Form PCT/ISA /210 (second sheet) (July 2009)

# EP 2 813 549 A1

| | International application No. |
|---|---|
| | PCT/CN2012/070128 |

C (Continuation).     DOCUMENTS CONSIDERED TO BE RELEVANT

| Category* | Citation of document, with indication, where appropriate, of the relevant passages | Relevant to claim No. |
|---|---|---|
| X | CN 101891953 A (KINGFA SCI&TECH CO LTD) 24 November 2010 (24.11.2010) claims | 1-2, 8-10 |
| Y | | 3-7 |
| X | EP 1950238 A2 (SOLVAY ADVANCED POLYMERS LLC) 30 July 2008 (30.07.2008) claims | 1-2, 8-10 |
| Y | | 3-7 |

Form PCT/ISA /210 (continuation of second sheet ) (July 2009)

**INTERNATIONAL SEARCH REPORT**
Information on patent family members

| | International application No. |
|---|---|
| | PCT/CN2012/070128 |

| Patent Documents referred in the Report | Publication Date | Patent Family | Publication Date |
|---|---|---|---|
| CN 101735609 A | 16.06.2010 | None | |
| CN 101759851 A | 30.06.2010 | CN 101759851 B | 11.01.2012 |
| WO 2010115961 A1 | 14.10.2010 | US 2012029124 A1 | 02.02.2012 |
| | | EP 2417191 A1 | 15.02.2012 |
| | | KR 20120017027 A | 27.02.2012 |
| | | CN 102388095 A | 21.03.2012 |
| WO 2010139369 A1 | 09.12.2010 | US 2012083558 A1 | 05.04.2012 |
| | | EP 2438113 A1 | 11.04.2012 |
| | | INMUMNP 201102555 E | 06.04.2012 |
| CN 101891953 A | 24.11.2010 | None | |
| EP 1950238 A2 | 30.07.2008 | EP 1950238 A3 | 03.09.2008 |

Form PCT/ISA /210 (patent family annex) (July 2009)

**INTERNATIONAL SEARCH REPORT**

| International application No. |
| --- |
| PCT/CN2012/070128 |

**A. CLASSIFICATION OF SUBJECT MATTER**

C08L 77/06 (2006.01) i

C08K 5/5313 (2006.01) i

C08K 3/00 (2006.01) i

Form PCT/ISA /210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9609344 A
- US 6255371 B
- US 5773556 A
- EP 1950238 A
- US 2008068973 A
- US 200900301241 A
- CN 0212683